# EUROPÄISCHE PATENTSCHRIFT

(11) **EP 2 978 519 B1**
(45) Veröffentlichungstag und Bekanntmachung des Hinweises auf die Patenterteilung: **26.07.2023**
(21) Anmeldenummer: 14714656.7
(22) Anmeldetag: 26.03.2014
(51) Int. Cl.: B01F 23/40

(54) **FILTRATIONS- UND EMULGIERUNGSVORRICHTUNG**
FILTRATION AND EMULSIFICATION DEVICE
DISPOSITIF DE FILTRATION ET D'ÉMULSIFICATION

(30) Priorität: 26.03.2013 DE 202013101302 U
(43) Veröffentlichungstag der Anmeldung: 03.02.2016
(73) Patentinhaber: MST Microsieve Technologies GmbH, 8706 Feldmeilen (CH)
(72) Erfinder: LIEBERMANN, Franz, CH-8706 Feldmeilen (CH); VAN RIJN, Cornelis Johannes Maria, NL-7255 Hengelo (GLD) (NL)
(74) Vertreter: Cremer & Cremer
(86) Internationale Anmeldenummer: PCT/EP2014/056080
(87) Internationale Veröffentlichungsnummer: WO 2014/154761

(56) Entgegenhaltungen:
- EP-A1- 2 042 229
- EP-A1- 2 361 665
- EP-A1- 2 394 733
- WO-A1-97/19745
- WO-A1-2010/072230
- CN-U- 202 113 680
- DE-A1-102006 038 340
- JP-A- 2002 166 110
- US-B1- 6 558 545

## Beschreibung

Die Erfindung betrifft eine Vorrichtung mit mindestens einem Membranmedium in einem Behälter, die in gleicher Bauweise sowohl für Filtration als auch für Emulgierung eingesetzt werden kann.

Filtration von Flüssigkeiten ist typischerweise die Abtrennung unerwünschter Partikel aus einer ungefilterten Substanz, z. B. aus Flüssigkeiten, Gasen oder Suspensionen, dem sogenannten Unfiltrat, um daraus zwei Phasen herzustellen: eine gefilterte, gereinigte Substanz, das sogenannte Filtrat (bei der Mikrofiltration) oder Permeat (bei der Ultra- und Nanofiltration), und eine konzentrierte Phase, das Konzentrat (bei der Mikrofiltration) oder Retentat (bei der Ultra- und Nanofiltration). Während dieses Filtrationsprozesses neigen in dem auch als Beschickungsflüssigkeit bezeichneten Unfiltrat vorhandene Partikel dazu, sich auf einem oder mehreren Bereichen der Filtermediumoberfläche, z. B. der Membran- oder Mikrosieboberfläche, in der Konzentrat- oder Retentatphase anzusammeln, d. h. derjenigen Seite des Filtermediums oder Mikrosiebes, die dem Unfiltrat zugewandt ist. Auf der Membran- oder Mikrosieboberfläche bildet sich so allmählich ein Kuchen oder eine Deckschicht aus. Durch die Anhäufung von Partikeln oder Makromolekülen in dem auch als Zufuhrflüssigkeit bezeichneten Unfiltrat entsteht ein Rückstau, ein Konzentrationsgradient, genannt Konzentrationspolarisation, in unmittelbarer Nähe der und auf den Membran- oder Mikrosieboberflächen, der eine Beeinträchtigung der Filterleistung bewirkt.

Mikrosiebe sind definiert als sehr flache Filtrationsmembrane mit hohen Porositäten (>20 %) und/oder mit Poren mit einer Porenkanallänge kleiner als das Zehnfache bzw. kleiner als das Dreifache des Porendurchmessers.

Verschiedene Verfahren sind bekannt, die entweder eine Ansammlung von Partikeln auf dem Filtermedium verhindern oder das Filtermedium von akkumulierten Partikeln oder Schichten reinigen.

Gängige Praxis der Filterreinigung ist neben der Querstromfiltration die Rückspülung des Filtermediums. Beim Rückspülen wird eine Reinigungsflüssigkeit, z. B. vollentsalztes (VE-)Wasser oder das Filtrat selbst, auch als Permeat bezeichnet, von der Filtratseite, auch als Permeatseite bezeichnet, durch das Filtermedium hindurch auf die Konzentratseite, die auch Retentatseite genannt wird, befördert. Zu diesem Zweck wird das Filtrat (Permeat) für kurze Zeit mit einem höheren, als dem für die Filtration notwendigen Transmembrandruck (TMD) beaufschlagt. Häufig ist dazu die Beendigung des Filtervorgangs erforderlich. Das Rückspülen erfolgt in diesem Fall nach dem Filtrationsvorgang. Rückspülung mit kurzen Rückspülstößen, also eine Umkehr der Strömungsrichtung durch die Membran, durch Anlegen eines negativen TMD während des Filterprozesses, also ohne dessen Beendigung, ist auch bekannt. Solche Rückspülverfahren sind durch einen relativ komplizierten Aufbau gekennzeichnet und weisen nur eingeschränkte Reinigungswirkung auf Membran- oder Mikrosieboberflächen aus. Die Wirksamkeit dieser Rückspülungsverfahren wird begrenzt, durch (1) eher geringe Rückspülungsfrequenzen (1 - 60 mal pro Stunde) und (2) große Abstände zwischen dem Ort der Auslösung der Rückspülhübe (-stöße) und den Membranoberflächen, insbesondere in Industrieanlagen. Letztere können entweder unerwünschte Hammerschläge oder Verzögerungen zur Folge haben. Während der Rückspülhübe wird die Filtration nicht nur angehalten sondern umgedreht, womit bereits erzeugtes Filtrat wieder verloren geht.

Ein bekanntes Verfahren der Querstromfiltration ist die Rotation von Filterscheiben während der Filtration, um die Bildung einer Deckschicht durch Anlegen von Scherkräften auf der Membran- oder Mikrosieboberfläche zu vermindern. Beispiele solcher Filteranlagen sind gekennzeichnet durch das Stapeln von Filterscheiben mit Mittelbohrungen, die auf einzelnen oder mehreren Hohlwellen angebracht sind. Der Filterscheibenstapel, wird um seine Achse gedreht.

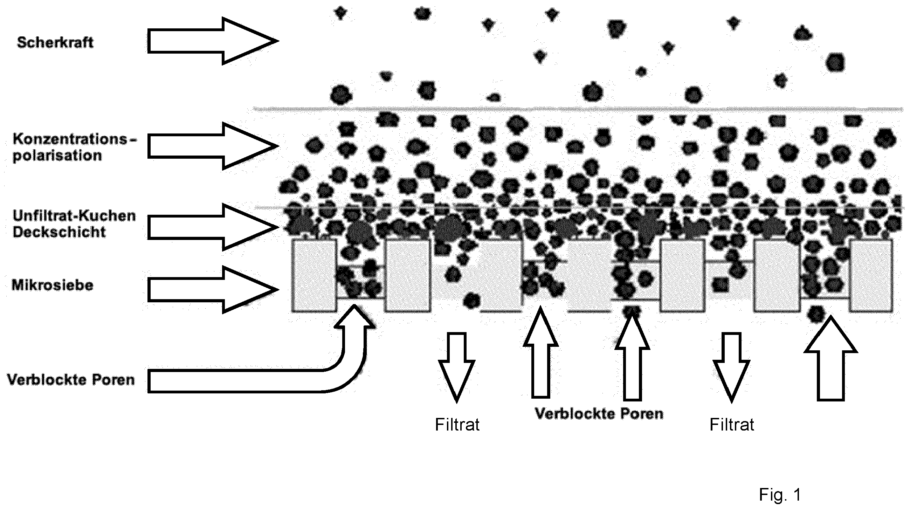

Aber auch durch diese Maßnahmen kann die Deckschichtbildung auf der Membran- oder Mikrosieboberfläche häufig nicht ausreichend verringert werden. Eine Folge davon ist, dass ziemlich bald nach dem Start des Filtrationsprozesses die Filtrationsleistung rasch absinkt, abhängig von der zu filtrierenden Substanz und der verwendeten Anlage. Auch hohe Rotationsgeschwindigkeiten sind häufig nicht in der Lage, Partikel aus den Poren des Filtermediums, wie in Fig. 1 dargestellt, zu entfernen. Verblockte Poren können dann nur noch durch eine Umkehrung der Strömungsrichtung geöffnet werden.

Es ist daher wünschenswert, ein zuverlässiges und einfaches Verfahren zur Reinigung der Membran- oder Mikrosieboberflächen und dadurch das Verhindern der Bildung einer Deckschicht auf dem Filtermedium während des Filtrationsprozesses zu finden.

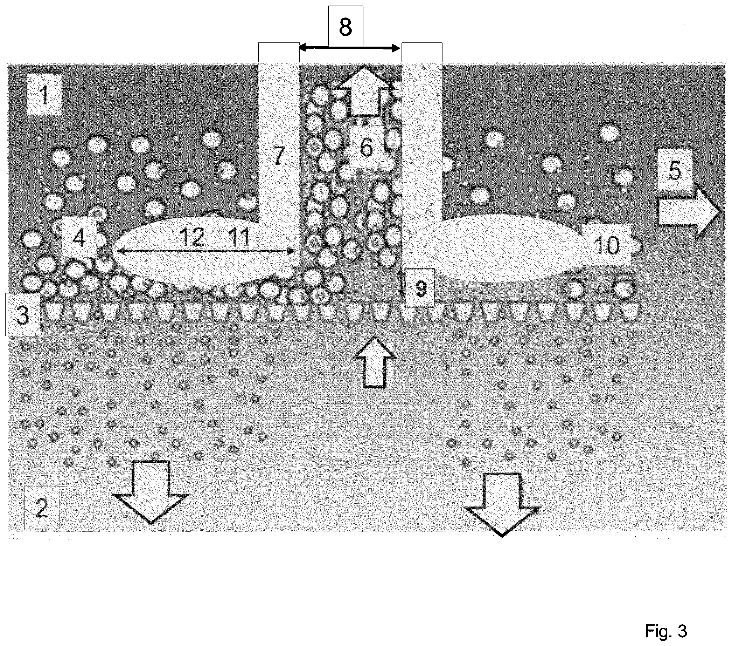

Verschiedene Lösungsvorschläge sind bekannt, so wird in US- Patent Nr. 6,217,637 B1 eine Vorrichtung aus der Textilverarbeitung beschrieben mit der kleine Partikel aus einem Luftstrom abgetrennt werden sollen. Dies wird über ein zweistufiges Filtersystem erreicht, bei dem Maschengewebe auf rotierende Filtertrommeln oder -scheiben aufgespannt ist. Um Verstopfungen der Maschengewebe mit Maschenweiten, die typischerweise in einem Bereich zwischen 20 und 80 mesh (1,2 - 0,3 mm Lochgröße) liegen, zu verhindern, wird eine Reinigungsmethode mittels eines trockenen Vakuums eingeführt, die dadurch gekennzeichnet ist, dass ein Vakuumarm (S. 12, Fig. 3) negativen relativen Druck erzeugt, der eine mögliche Deckschicht von dem Maschengewebe entfernen soll. Ähnlich werden auch im deutschen Patent Nr. DE 23 51 298 A und im US-Patent Nr. 4,222,754 bewegliche oder fixe Vorrichtungen für die Rückspülung von Filtertrommeln über Düsen oder Absaugvorrichtungen beschrieben. Die Abreinigung von rotierenden Filtern mittels Saugvorrichtungen ist zudem bekannt aus CN 202 113 680 U und EP 2 361 665 A1.

Die hierin beschriebene Erfindung ist hingegen bevorzugt für die Membranfiltration von Flüssigkeiten mit Mikro-, Ultra- und Nanofiltrationsmembranen bestimmt, die eine mittlere Porengröße zwischen 5 Mikrometer bis 0,5 Nanometer aufweisen und beispielsweise für die Proteinfraktionierung, Bierklarfiltration oder Sterilfiltration von Produkten aus der Lebensmittelindustrie, Milchwirtschaft, pharmazeutischen und biotechnologischen Herstellung eingesetzt werden. Anders als bei den vorstehend beschriebenen Vorrichtungen, wird in der hier beschriebenen Erfindung keine Trommel sondern eine Scheibe bzw. ein Paket rotierender Scheiben gleichzeitig gereinigt. Anders als in den vorstehend erwähnten Verfahren geht es bei der vorliegenden Erfindung nicht um die klassische Rückspülung sondern um hochfrequente Strömungsumkehr, auch bezeichnet als "rapid flow reversal".

Gegenstand dieser Erfindung ist es, die Filtrationseffizienz von Filtervorrichtungen mit insbesondere rotierenden Filtermedien oder Mikrosieben in wirtschaftlich durchführbarer, technisch innovativer und skalierbarer Weise zu ermöglichen.

Dabei gelangt die hochfrequente Strömungsumkehr ("rapid flow reversal") zum Einsatz. Wie bereits eingangs erwähnt, wird die Leistung der Membranfiltration durch Fouling ("Schichtbildung auf der Membran durch suspendierte oder kolloidal gelöste Stoffe organischer Herkunft, mit reduzierender Wirkung auf die Filtrat-Durchsatzleistung, u.a..... durch mikrobielle Kontamination..." Gasper et al., Handbuch der industriellen Fest/Flüssig-Filtration, 2. Auflage, Weinheim, 2000) in den Membranporen eingeschränkt, wodurch die Filtrationsleistung über einen bestimmten Zeitraum stark abfallen kann. Hochfrequente Strömungsumkehr verhindert diesen Rückgang der Filtrationsleistung. Bei der hochfrequenten Strömungsumkehr wird der Transmembrandruck für eine kurze Zeit umgekehrt, womit auch die Fließrichtung kurz umgekehrt wird. Diese Umkehr der Fließrichtung reinigt nicht nur die Membranoberfläche sondern auch Verunreinigungen in den Membranporen selbst.

Der entscheidende Unterschied zwischen der erfindungsgemäßen hochfrequenten Strömungsumkehr und der klassischen Rückspülung sowie der vorbekannten hochfrequenten Rückpulsung liegt darin, dass die beiden vorbekannten Verfahren immer einen Druck von der dem Filtrat zugewandten Seite der Membran durch die Membran hindurch in die Unfiltratseite erzeugen, obschon sich alle Substanzen, die die Filtrationsleistung einschränken oder verhindern auf der dem Unfiltrat zugewandten Membranoberfläche oder in den Poren befinden. Damit wird die einzelne Pore für kurze Zeit von einer Deckschicht befreit, die anschließend sofort wieder zuwachsen kann. Vergleichbar mit einer dünnen waagerecht aufgespannten Plastikfolie (analog einem Biofilm oder einer Deckschicht), in die mit einem Luftschlauch von unten durch Anlegen eines Überdruckimpulses eine Öffnung (Pore) geschlagen (analog einem Rückspül- Impuls) wird, schließt sich diese Öffnung nach dem Druckimpuls, und die Folie (Biofilm oder Deckschicht) legt sich auf die Schlauchöffnung (Pore) und verstopft diese wieder, wenn Druck von der oberen Seite der Folie angelegt wird. Die erfindungsgemäße hochfrequente Strömungsumkehr setzt im Gegensatz dazu auf der dem Unfiltrat zugewandten Membranoberfläche an, direkt dort also, wo sich diese Schichten bilden. Dadurch können diese nicht permeierenden Substanzen, die ursächlich für Membranfouling und -verblockung verantwortlich sind, direkt vom Ort ihres Entstehens und vor allem vollständig, über die gesamte Membranoberfläche und deshalb wesentlich effizienter entfernt werden. Schließlich werden im Gegensatz zu Rückspülung und Rückpulsung bei der hochfrequenten Strömungsumkehr die deckschichtbildenden Substanzen durch die Saugschlitze von der Membranoberfläche entfernt und wegtransportiert, nicht lediglich aus den Poren gestoßen.

Gegenstand dieser Erfindung ist die hochfrequente Strömungsumkehr mittels einer Saugleiste oder einer Düsenplatte, die eine kurze Umkehr der Fließrichtung während des Filtrationsprozesses ermöglicht. Um eine Umkehr der Fließrichtung durch das Membranmedium, auch als Membrane oder im Anwendungsfall der Filtration Filtermedium bezeichnet, zu gewährleisten, erzeugt die Saugleiste bzw. Düsenplatte einen negativen relativen Druck in mindestens der gleichen Höhe wie der während der Filtration beaufschlagte Transmembrandruck.

Die hochfrequente Strömungsumkehr erfolgt typischerweise bei Frequenzen zwischen 1 und 100 Hz. Hochfrequente Strömungsumkehr ist immer dort notwendig, wo Hochleistungsfilter mit besonders effizienten Membranschichten eingesetzt werden, die sich dadurch kennzeichnen, dass sie bei niederen TMD (typischerweise < 0,5 bar) betrieben werden, deren Leistung (gemessen in erzeugtem Filtrat- oder Permeatvolumen pro Filterfläche, Zeiteinheit und Transmembrandruck) trotz Überströmungsgeschwindigkeiten bis 20 m/s ("cross flow"), aber ohne den Einsatz von hochfrequenter Strömungsumkehr innerhalb von wenigen Minuten um Größenordnungen abfällt (weit über 90 %). So sinkt die Leistung beispielsweise bei Filtration eines Trinkwassers mit einer Hochleistungsmembran innerhalb von 9 Minuten von 36 m³/m²/h/0,2 bar trotz Überströmung mit einer Umfangsgeschwindigkeit von 12 m/s auf unter 300 L/m²/h/0,2 bar (0,3 m³/m²/h/0,2 bar). Dieses Membranfouling kann durch normale Rückspülung oder Rückpulsung nicht rückgängig gemacht werden und wurde deshalb bisher als irreversibel betrachtet.

Die Erfindung ermöglicht erstmalig eine Reduktion des Filtratverlustes auf ein Minimum, weil das zur Abreinigung der Membranoberfläche durch hochfrequente Strömungsumkehr notwendige Flüssigkeitsvolumen mit abnehmender Entfernung zwischen Saugschlitz und Membranoberfläche mit der dritten Potenz abnimmt. Diese Möglichkeit ist mit keinem der heute bekannten Rückspül- oder Rückpulssysteme gegeben.

Die erfindungsgemäße Vorrichtung ist sowohl für die Mikro-, Ultra- oder Nanofiltration (also für Porengrößen zwischen 0,5 nm und 5 µm) als auch für die Emulgierung von Flüssigkeiten geeignet. Sie weist zumindest ein rotierbares Membranmedium mit einer Filtrat-/Permeatseite (bei Filtrationsvorgängen) bzw. einer einer dispersen Phase zugewandten Seite (bei Emulsionsvorgängen) und einer Konzentrat-/Retentatseite (bei der Filtration) bzw. einer einer kohärenten Phase (bei der Emulgierung) zugewandten Seite auf. Das Membranmedium befindet sich in einem Behälter und ist in diesem Behälter rotierbar. Der Behälter weist mindestens einen Zulauf für ein Unfiltrat bzw. die kohärente Phase, mind. einen Überlauf für ein Unfiltrat bzw. eine Emulsion und mind. einen rotierbaren Kanal für Filtrat-/Permeatablauf bzw. Zulauf der dispersen Phase und eine Saugvorrichtung auf. Mithilfe der Saugvorrichtung ist auf Teilbereichen des zumindest einen rotierbaren Membranmediums im Behälter ein Unterdruck erzeugbar. Der Unterdruck ist in kleinen Zeitabschnitten erzeugbar, wobei der Unterdruck bevorzugt intervallmäßig anlegbar ist. Vorgesehen ist das Anlegen eines Unterdrucks mit einer Frequenz von 1-100 Hz. Er wird auf einer Unfiltratseite bzw. der kohärenten Phase zugewandten Seite angelegt. Die Saugvorrichtung weist zumindest eine parallel zum rotierbaren Membranmedium angeordnete Saugleiste oder Düsenplatte auf oder ist eine solche. Sie ist in einem Abstand von 0,05 mm - 0,5 mm von dem Membranmedium angebracht. Auf diese Weise ist eine Oberfläche des Membranmediums von auf der Unfiltratseite während eines Filtrationsvorganges angesammelten nicht permeierenden Stoffen reinigbar, bzw. auf der der kohärenten Phase zugewandten Seite während eines Emulgierungsvorgangs eine Tropfenbildung der aus einer Membranoberfläche austretenden dispersen Phase förderbar.

Es stellte sich überraschend heraus, dass eine Optimierung der Filtrationsleistung durch kontinuierliche Reinigung des Filtermediums oder Mikrosiebes während der Filtration von Verunreinigungen, die sich auf der Filteroberfläche oder Membran ansammeln können, erfolgt. Diese Reinigung erfolgt während des Filtrationsprozesses durch eine oder mehrere Düsen oder Saugleisten, die lokal einen negativen Transmembrandruck (TMD) auf den Membranoberflächen ausüben, was auch als Absaugen von Filtrat / Permeat durch die Membran- oder Mikrosieboberflächen hindurch in die Beschickungsseite des Filtergehäuses bezeichnet werden kann.

Es wird eine Schichtbildung während des Filtrationsprozesses durch eine neue Art des Rückspülens bzw. einer neuen Art der Rückpulsung, die vorliegend hochfrequente Strömungsumkehr genannt wird, bei höheren Frequenzen mit sehr geringen Filtrat-/Permeat-Volumina und sehr nahe an der Membran- oder Mikrosieboberfläche, also dem Ort der Deckschichtbildung, durchgeführt, wodurch die Filtrationsleistung nachhaltig gesteigert werden kann.

Im Folgenden werden einzelne Ausführungsbeispiele der Erfindung anhand der Figuren erläutert und beschrieben.

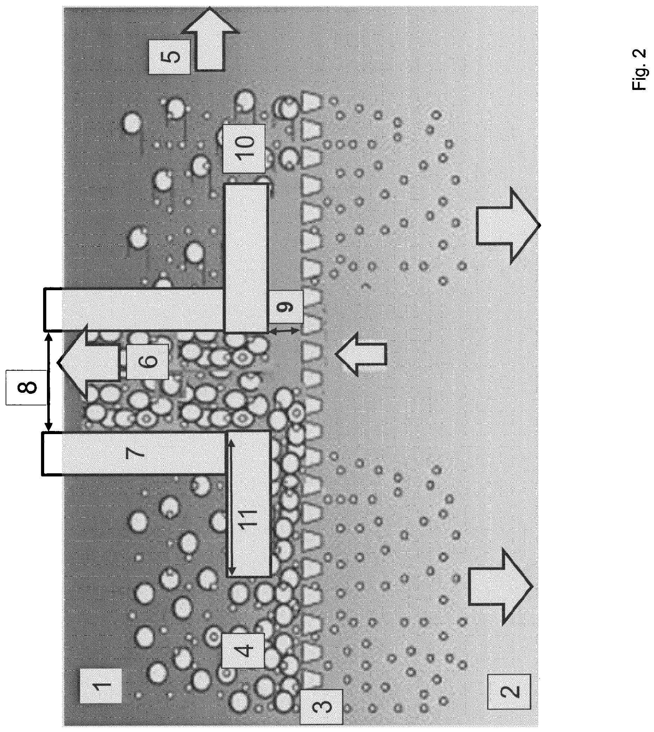

Erfindungsgemäß wird in einer bevorzugten Ausführungsform einer Filtervorrichtung, bestehend aus mindestens einem Filtermedium 3, z. B. ein Mikrosieb, einem Filtergehäuse und einer Einrichtung zum Drehen des Filtermediums 3 im Filtergehäuse, siehe Fig. 2., das Filtermedium während des Filtrationsprozesses mit kurzen Perioden negativen TMDs in der folgenden Art und Weise beaufschlagt. Auf der Konzentrat- oder Retentatseite 1 wird eine Düsenplatte oder Saugleiste 11 in einem Abstand 9 von 0,05 mm - 0,5 mm von dem rotierenden Filtermedium 3 angebracht. Mit dem Bezugszeichen 7 ist die Halterung der Saugleiste bzw. Düsenplatte 7 bezeichnet. Die Düsenplatte bzw. die Saugleiste 11 wird mit einem negativen relativen Druck oder Sog bezüglich des TMD betrieben und saugt dadurch die Konzentrat- oder Retentatflüssigkeit über der Membran- oder Mikrosieboberfläche ab. Da die Düse oder Saugleiste 11 sich in der Nähe des Filtermediums 3 oder Mikrosiebs befindet, werden auch Partikel und Deckschichtbestandteile mit der adsorbierten Flüssigkeit 6 in die Düse oder Saugleiste 11 gesogen, und damit eine lokal effiziente Reinigung 10 des Filtermediums 3 erreicht, womit die ursprüngliche Filtrationsleistung nahezu wiederhergestellt wird.

Die Düse oder Saugleiste 11 wird vorzugsweise so angebracht, dass während einer vollen Drehung des Filtermediums 3, über der gesamten effektiven Fläche des Filtermediums 3 gesaugt wird, um die Gesamtheit der auf dem Filtermedium 3 angesammelten Partikel und Deckschichten über die Düsen oder Saugleiste 11 abzusaugen. Der Unterdruck, welchen die Düsen oder Saugleisten 11 auf das Filtermedium 3 lokal ausüben, sollte größer sein als der TMD.

Erfindungsgemäß wird ein hoher Strömungswiderstand zwischen der Unfiltratseite und der Saugleiste 11 erzeugt. Auf diese Weise kann ein ausreichender Unterdruck oder Saugdruck gehalten werden.

Erfindungsgemäß können zusätzliche Maßnahmen ergriffen werden, um eine maximale Geschwindigkeit oder einen maximalen Saugdruck der Flüssigkeit zwischen dem Filtermedium und der Saugleiste 11 zu erzeugen. Auf diese Weise wird eine maximale Auftriebskraft auf Deckschicht und Partikel im Filtermedium erzeugt.

Die Saugleiste 11 nahe dem Filtermedium wird bevorzugt flügelförmig sein (siehe Fig. 3; vgl. Bezugszeichen 12), damit mehr laminare Strömung und/oder Turbulenz geschaffen und eine verbesserte Absaugung bzw. Saugdruck erzeugt werden können.

Die Saugleiste oder Düsenplatte 11 weisen zumindest eine Düse bzw. Schlitz, auch als Saugschlitz 8 bezeichnet, auf, welche bzw. welcher deshalb in der Saugleiste oder Düsenplatte 11 parallel zum Filtermedium 3 angebracht ist. Die Düse bzw. der Schlitz 8 sollte so nah wie möglich an diesem Filtermedium 3 platziert werden. Insbesondere liegt der Abstand zwischen 0,05 und 0,25 mm. Mit einem Abstand von weniger als z. B. 0,25 mm wurde in Versuchen eine sehr gute Saugleistung erzielt. Die benötigte Flüssigkeit 6, die durch den Schlitz 8 strömt, ist gering.

Die Saugleiste oder Düsenplatte 11 hat eine Gesamtbreite von einigen mm bis zu einigen cm parallel zum Filtermedium 3. Der Unterdruck zwischen der Saugleiste 11 und dem Filtermedium 3 wird auf diese Weise besser übertragen. Je breiter die Saugleiste 11 ist, desto höher ist der entsprechende Saugdruck. Bevorzugt beträgt die Gesamtbreite der Saugleiste oder Düsenplatte ungefähr das 1-10fache des Abstands der Saugleiste oder Düsenplatte von dem Membranmedium - hier dem Filtermedium. Es ist ersichtlich, dass die Gesamtbreite der Saugleiste bzw. Düsenplatte von der Gesamtbreite des zu reinigenden Filtermediums abhängt. Bei Filtermedien mit großen Durchmessern kann es erforderlich sein, mehrere Saugleisten bzw. Düsenplatten pro Filtermedium nebeneinander vorzusehen. Als besonders gut funktionierend stellte sich eine Saugleiste oder Düsenplatte heraus, die mindestens fünfmal breiter ist als deren Abstand zur Membrane.

Um das Filtermedium oder Mikrosieb gegen direkten Kontakt mit der Saugleiste während der Drehung zu schützen, wird in einer bevorzugten Ausführungsform das Filtermedium mit einer Tiefe zwischen 10 und 500 µm in einen Filterträger versenkt, bevorzugt in einer Tiefe zwischen 50 und 200 µm.

Vorzugsweise werden die Saugleisten 11 oder die schlitzförmigen Düsen 8 radial in Bezug auf ein Filtermedium 3, z. B. eine runde Filter- oder Mikrosiebscheibe, und senkrecht zur Drehachse angeordnet. Die Breite des Schlitzes 8 sollte nicht zu gering sein, um unerwünschten Druckabfall in der Saugleiste selbst zu vermeiden, andererseits sollte die Breite des Schlitzes 8 auch nicht zu groß sein, da dann der Strömungswiderstand zwischen der Saugleiste und dem Filtermedium kleiner wird. Typischerweise wird der Schlitz 8 eine Breite zwischen 50 µm und 10 mm, und bevorzugt zwischen 200 µm und 1 mm aufweisen.

Die parallele Saugleiste oder Düsenplatte 11 hat dann eine Breite von wenigen Millimetern bis zu einigen Zentimetern und ist damit immer breiter als die Breite des Schlitzes 8. In einer bevorzugten Ausführung beträgt die Gesamtbreite der Saugleiste/Düsenplatte 11 mindestens das 10fache der Breite eines Saugschlitzes 8. In der Ausführung der Figuren 2 und 3 gibt die Halterung 7 die Breite des Saugschlitzes 8 vor. Mit 11 ist die eigentliche Saugleiste bezeichnet. Darüber erfolgt das Einsaugen der Deckschicht, die dann in der vorgestellten Ausführungsform durch die Halterung 7 hindurch entfernt wird. Die Saugleiste 11 ist breiter als der Saugschlitz 8. Sie sorgt für hohe Scherkräfte; entsprechend ist ihr Abstand zum Filtermedium 3 möglichst gering einzustellen.

Während des Filtrationsprozesses wird durch die Düsen oder Saugleisten erfindungsgemäß ein umgekehrter Durchfluss, erzeugt durch das Anlegen eines relativen Unterdrucks, erzielt, der ausreicht, um die Partikel, die durch den TMD auf das Filtermedium 3 oder Mikrosieb gedrückt werden, zu entfernen. Typischerweise wird ein gezielter lokaler Unterdruck von 10 bis 500 Millibar auf diese Weise erzeugt. Es besteht dabei keine Notwendigkeit, den Filtrationsvorgang zu stoppen, wie es bei einigen klassischen Rückspülungsverfahren erforderlich ist. Je näher die Saugleiste relativ zum Filtermedium 3, insbesondere der Membran, angebracht ist, desto exponentiell höher wird der Saugdruck sein. Der Sog wird gezielt auf ein sehr eng begrenztes Membransegment konzentriert, was einerseits den Filtratverlust (Permeatverlust) minimiert und anderseits an dieser Stelle einen ungedämpften Strömungsumkehr-Impuls höchster Wirksamkeit entfaltet. Die hohe Wirksamkeit ist der Tatsache geschuldet, dass sich normale Rückspülsysteme in größerem Abstand zur Membran befinden, was zu Verlusten durch Elastizitäten bzw. durch Streuung führt.

Wesentlich für diese Erfindung ist, dass der lokal ausgeübte Unterdruck auf der Unfiltrat- bzw. Konzentrat- oder Retentatseite 1 durch Schlitze 8 (Düsen) in der Saugleiste oder Düsenplatte ausgeübt wird. Diese Druckänderung, von relativem Überdruck, dem TMD, zu relativem Unterdruck auf der Oberfläche des Filtermediums 3, ist vorzugsweise kurzfristig und tritt beispielsweise mehrmals innerhalb einer Sekunde auf. Diese Druckänderungsphasen, bestehend aus TMD - Unterdruck - TMD können sehr schnell, kurz und in häufigen Abfolgen erfolgen.

Für den Fachmann ist klar, dass die Filtrationsleistungen unter Umständen von der Art des Unfiltrates, der Filtrationsvorrichtung, der Drehzahl, dem gewählten Filtermedium 3 usw. abhängen. Entsprechend wird der Fachmann in der Lage sein, die Erfindung als relative Angabe zu verstehen und die erforderlichen Maßnahmen treffen, um die Erfindung auf seine Bedürfnisse und Bedingungen anzupassen. So haben sich beispielsweise in Versuchen der Anmelderin Verbesserungen der Filtrationsleistung von 1,5 - 60fach im Vergleich zu Filtration in derselben Anlage, jedoch ohne erfindungsgemäßes Absaugen gezeigt.

Gute Ergebnisse wurden erzielt, wenn das Filtermedium 3 auf eine mittlere Drehzahl zwischen 1 und 100 Hz eingestellt wurde, und die Dauer des lokal ausgeübten Unterdrucks periodisch und während weniger als 1% der gesamten Drehzeit ausgeübt wurde. Während der übrigen Drehzeit (> 99 %) trägt das so gereinigte lokale Filtermedium zur Betriebsleistung des Filtrationsverfahrens bei. Als Beispiel sei eine Schlitzbreite 8 von 1 mm bei einem Umfang des rotierenden Filtermediums von 10 cm erwähnt

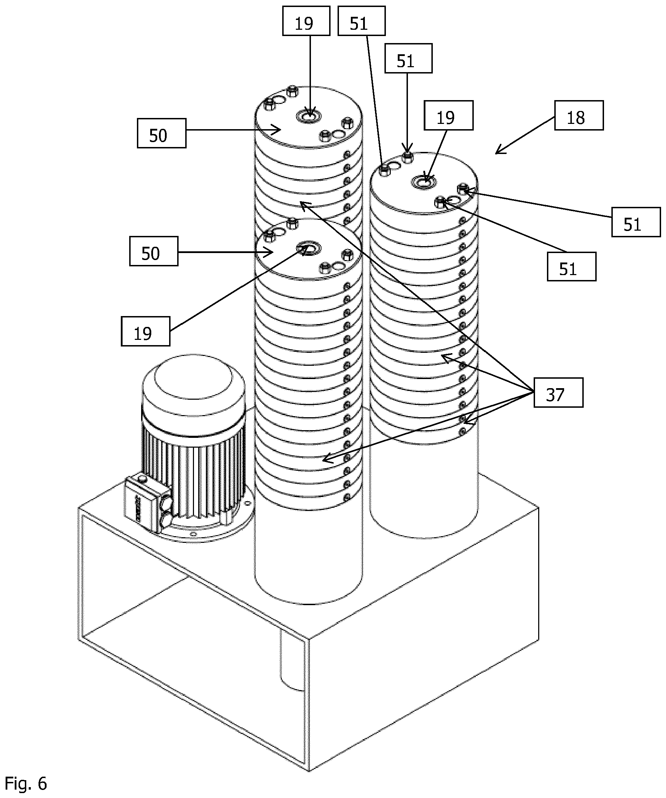

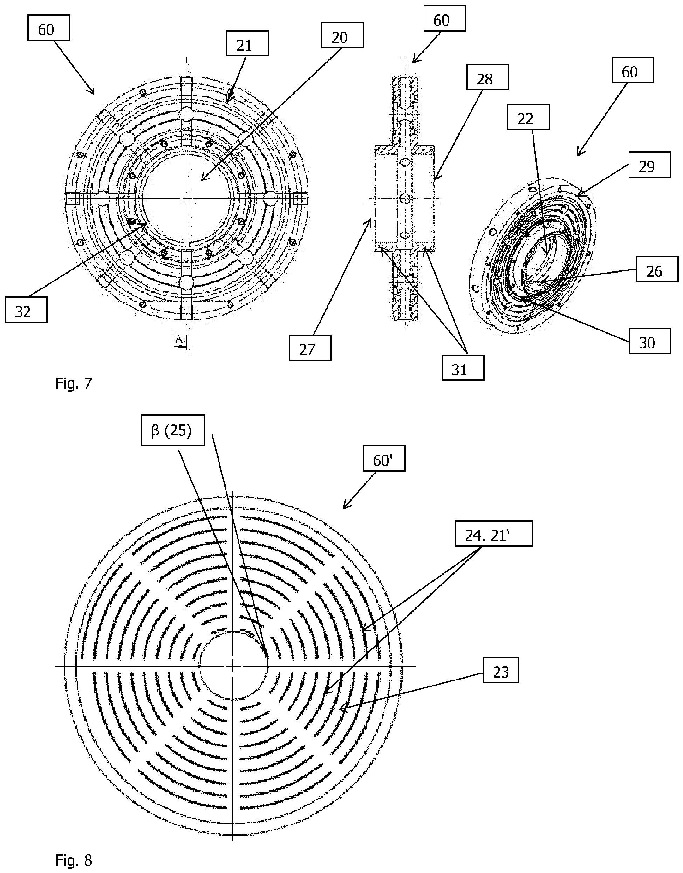

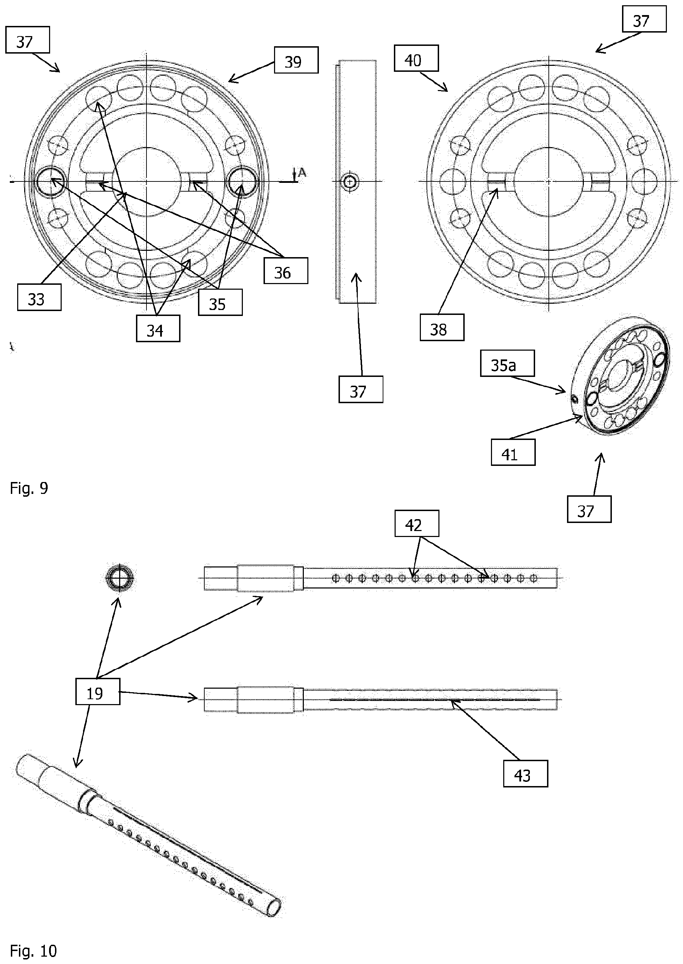

Ein besonderer Vorteil dieser Erfindung ist die einfache Skalierbarkeit der erfindungsgemäßen Vorrichtung. Fig. 6 zeigt in einer Übersicht den Aufbau eines größeren Systems aus lediglich zwei zusammensteckbaren Grundelementen mit Mittelbohrung, die auf eine rotierbare Hohlwelle 19 gestapelt und mit einem Deckel 50 über Zuganker 51 abgedichtet werden. Die zwei Grundelemente sind das innenliegende und auf der Übersichtszeichnung (Fig. 6) nicht sichtbare rotierende Membranstützelement (Fig. 7) und das in Fig. 6 sichtbare statische Impulssogelement (Impuls-Sog-Element), das zugleich Membranschutzfunktion hat. Die Gesamtvorrichtung in Fig. 6 ist mit dem Bezugszeichen18 bezeichnet. Das Impulssogelement ist mit dem Bezugszeichen 37 bezeichnet und detaillierter in Fig. 9 beschrieben. Die beiden Grundelemente, Membranstützelement 60 (siehe Fig. 7) und Impulssogelement 37 (siehe Fig. 9), werden abwechselnd auf eine rotierbare Hohlwelle 19 (siehe Fig. 10) gestapelt und durch Zuganker (51), insbesondere vier Zuganker, fixiert.

Das Membranstützelement 60 (siehe Fig. 7) ist rotierbar. Im Betrieb rotiert es. Auf ihm ist das Membranmedium, z. B. die Filtermembran oder eine Membrane, durch welche Emulgierung hindurch erfolgt, abgestützt. Das Membranmedium ist in der Darstellung der Figuren 7 und 8 nicht dargestellt. Das Membranstützelement 60 ist gekennzeichnet durch eine Mittelbohrung 20 und filigrane Membranstützwände 21 mit Wandstärken zwischen 0,1mm und 1 mm, die den Filtrat-/Permeatstrom über Öffnungen 22 in der zylindrischen Wand der Mittelbohrung 20 in die Hohlwelle 19 (siehe Fig. 10) im Zentrum ableiten. Die Membranstützwände 21 sind in einem Abstand 23 (siehe Fig. 8) zwischen 0,1 cm und 10 cm angeordnet. Sie erstrecken sich, der Form einer Kreisevolvente 24, wie in Fig. 8 dargestellt, folgend, von der Mittelbohrung 20 aus in einem Winkel β 25 zwischen 1° und 89° zu einer am Kreisumfang der Mittelbohrung angelegten Tangente, hin zum Außenrand des Membranstützelementes 60. Der Aufbau des Membranstützelements 60 ist symmetrisch mit Bezug auf die Achse der Mittelbohrung 20 wie in Fig. 7 dargestellt; so befinden sich die gleichen Membranstützwände 21, auch Profilelemente genannt, sowohl auf der Vorderseite 27 als auch auf der Rückseite 28 des Membranstützelements 60. Beidseits kann jeweils ein Membranscheibenring mittels eines Außen- 29 und eines Innendichtungsrings 30 angebracht werden. Als Membranscheibenring wird das auf dem Membranstützelement 60 abzustützende Membranmedium bezeichnet. Das Membranmedium weist eine Mittelbohrung auf. In den Figuren ist der Membranscheibenring nicht dargestellt.

Die Einheit aus Membranstützelement 60 und Membranmedium bzw. Membranscheibenring wird vorliegend auch Membranscheibe genannt.

Das Membranmedium, z. B. eine Membrane, wird zwischen dem inneren Außenrand, angedeutet durch den Außendichtring 29, und dem äußeren Innenrand, angedeutet durch den Innendichtring 30, des Membranstützelements 60, die plan zu den Membranstützwänden 21 angeordnet sind, über je einen Flachring (innen und außen) auf dem Membranstützelement 60 befestigt und über je einen O-Ring (innen und außen) abgedichtet.

Alternativ dazu kann das Membranstützelement 60 aus Glas gefertigt und mit einer Mikrosieb-Membran durch anodisches Bonden dicht verbunden und damit abgedichtet werden, womit weitere Dichtungen wegfallen.

In der dargestellten Ausführungsform weisen die einzelnen rotierenden Membranstützelemente 60 zur Rotationsachse symmetrische Kragen 31 auf, an deren äußerem Ende diese zusammengesteckt und über einen O-Ring 32 gegen den Filtratkanal, der durch die Mittelbohrung 20 verläuft, abgedichtet werden. Durch das Anbringen geeigneter Verbindungsbolzen zwischen den einzelnen Elementen kann in einer alternativen Ausführungsform auf eine Hohlwelle 19 ganz verzichtet werden.

Das Impulssogelement 37 (Fig. 9) ist statisch, d. h. es ist nicht rotierbar. Es weist eine etwas größere Mittelbohrung 33 auf als das Membranstützelement 60 (vgl. Fig. 7 und 8) und übergreift den Umfang des rotierenden Membranstützelements 60, um den für Zulauf, Überlauf und Absaugung des Unfiltrats notwendigen Durchmesser, der von Betriebsweise und Art der zu filtrierenden Flüssigkeit abhängt, bereitzustellen. Es dient zudem als Schutzhaube für das Membranmedium wie eine Membrane und weist am äußeren Rand mehrere Bohrungen 34, typischerweise 2 - 50 Bohrungen, für den Zufluss des Unfiltrats auf. Weitere Bohrungen 35, die über Querbohrungen 35a mit den Saugschlitzen 36 verbunden sind, sorgen für Abzug von sich an der Membranoberfläche bildenden Deckschichten über die Saugschlitze 36. Die Saugwirkung wird über eine oder mehrere auf der Austrittsseite der Bohrungen 35 angeordnete Pumpen (nicht dargestellt) erzeugt. Diese Saugschlitze 36 dienen der hochfrequenten Strömungsumkehr, und die Anzahl der Bohrungen 35 und 35a hängt von der Anzahl der Saugschlitze ab. Die Saugschlitze 36, typischerweise zwei, vier, sechs oder acht, sind radial im 90 °-Winkel zur Mittelbohrung 33 angeordnet und befinden sich in einer Distanz von 1 mm bis 0,01 mm parallel zu den Membranoberflächen. Ähnlich wie das Membranstützelement 60 ist auch das Impulssogelement 37, in Bezug auf die Mittelachse, gleich aufgebaut; so befinden sich Bohrungen 34, 35, Saugschlitze 36 und Saugleisten 38 sowohl auf der Vorder- 39 also auch auf der Rückseite 40 des Impulssogelements 37. Mehrere Impulssogelemente 37 können über den Außenrand zusammengesteckt werden. Im Außenrand des einen Impulssogelements 37 befindet sich eine Nut 41, in die ein O-Ring gelegt und mit dem benachbarten Impulssogelement zusammengesteckt werden kann usw.

Die Hohlwelle 19 in Fig. 10 ist durch Bohrungen 42 in der Rohrwand für die Filtratableitung und einen Mitnehmer 43 für die Übertragung der Rotation auf die Membranscheiben gekennzeichnet. Als Membranscheiben werden Membranstützelemente mit eingebautem Membranmedium, z. B. dem zuvor beschriebenen Membranring, bezeichnet. Das Gegenstück zum Mitnehmer 43 ist die Einbuchtung 26 im Membranstützelement 60. Die Hohlwelle 19 ist rotierbar bzw. wird im Betrieb rotiert. Die Mitnehmer 43 greifen in die Einbuchtungen 26 jedes Membranstützelementes 60 ein und versetzen diese ebenfalls in Drehung. Die Mitnehmer 43 schleppen die Membranstützelemente 60 sozusagen.

Schließlich kann die Erfindung erfindungsgemäß in umgekehrter Richtung betrieben werden, um mit dem anhand einer Filtration zuvor beschriebenen gleichen Aufbau Emulsionen herzustellen. Gegenstand dieser Erfindung ist es, die Emulgierungseffizienz von Vorrichtungen mit insbesondere rotierenden Membranen oder Mikrosieben in wirtschaftlich durchführbarer, technisch innovativer und skalierbarer Weise zu ermöglichen.

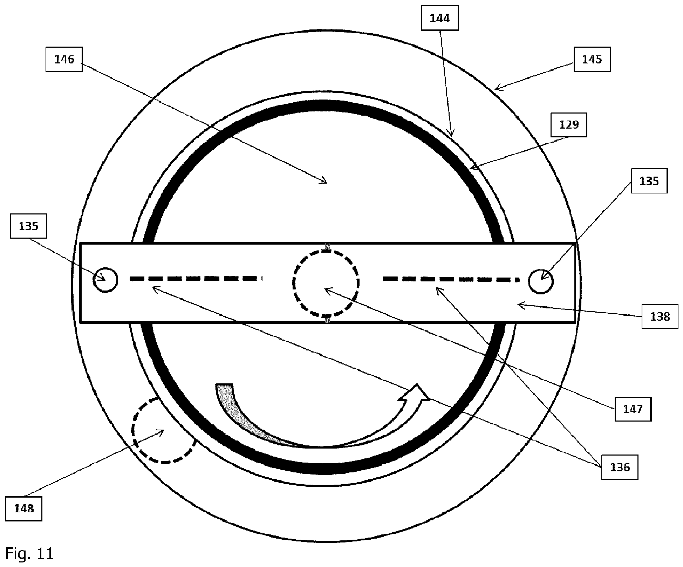

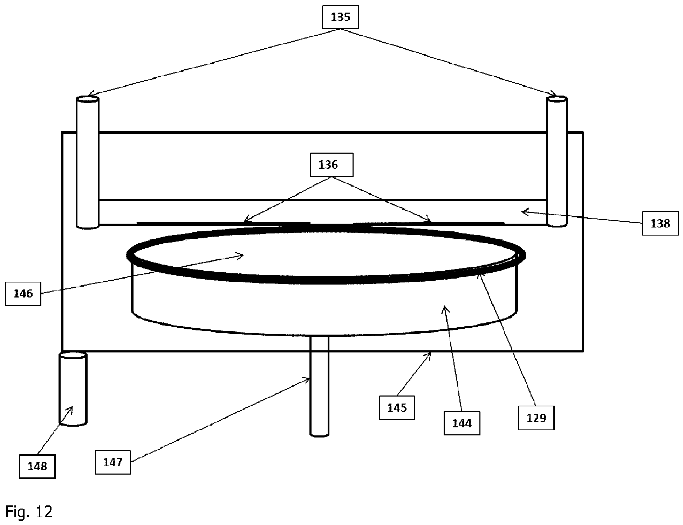

Ein Ausführungsbeispiel einer Emulgierungsvorrichtung wird im Folgenden anhand der Figuren 11 und 12 beschrieben.

Erfindungsgemäß wird die disperse Phase über die Hohlwelle 147 (vgl. auch Fig. 10) in die Membranstützelemente 144 (vgl. auch Fig. 7 und 8) gefüllt. Durch Rotation der Hohlwelle 147 und Membranstützelemente 144 entsteht eine Zentrifugalkraft, die die disperse Phase kontinuierlich durch die Poren des Membranmediums, hier dargestellt in Form von Membranscheiben 146, bevorzugt Mikrosieb-Scheiben (mit radial in Richtung Membranaußenrand abnehmenden Porendurchmessern, um die bei Rotation der Membran radial in Richtung Membranaußenrand zunehmenden Drücke auszugleichen), hindurch in die drucklose kohärente (kontinuierliche) Phase drückt. Dünne Saugschlitze 136, mit einer Breite zwischen 0,2 mm und 10 mm, insbesondere 0,5 und 2 mm, sind in den Saugleisten 138 angebracht. Durch Rotation (Pfeil in Fig. 11) der Membranscheiben 146 bildet die disperse Phase bei Austritt durch die Membranporen an und unmittelbar über der Membranoberfläche Tropfen mit wachsenden Tropfenhälsen (gem. v. Rijn, Nano and Micro Engineered Membrane Technology, Elsevier, 2004, S. 347 ff.). Je länger diese Tropfenhälse werden, desto größer werden die Tropfen der dispersen Phase in der Emulsion, während gleichzeitig die Tropfengrößenverteilung breiter und unkontrollierbarer wird. Diese Tropfen der dispersen Phase werden durch die rotationsbedingte Scherkraft, der sie nach Austritt aus den Membranporen ausgesetzt sind, unmittelbar auf die Membranoberfläche gedrückt. Das Anlegen eines auf ein kleines Segment der rotierenden Membranoberfläche konzentrierten, durch die statischen Saugschlitze 136 auf der Membranoberfläche erzeugten Soges bewirkt, dass an der Membranoberfläche sich bildende Tropfen der dispersen Phase kurz nach Austritt aus den Membranporen und bevor sich längere Hälse bilden können, von der Membranoberfläche angehoben, dort wesentlich höheren Scherkräften ausgesetzt, von den Hälsen abgetrennt und in die Saugschlitze gezogen werden. Diese Abtrennung erfolgt bevorzugt in kurzen Zeitabschnitten von 1 - 100 Hz. Die dabei entstehende Emulsion wird mittels einer Pumpe über die Saugrohre 135 abgezogen.

Die Größe der Tropfen und die Weite der Tropfengrößenverteilung der dispersen Phase in der Emulsion hängt vom Porendurchmesser der Membran, Rotationsgeschwindigkeit, Anzahl der Saugleisten und dem angelegten Sog (Leistung der Saugpumpe) ab. Der Zulaufkanal 148 dient der kontinuierlichen Beschickung der erfindungsgemäßen Emulgierungsvorrichtung mit der kohärenten Phase. Die kohärente Phase wird durch den Zulaufkanal 148 bei Drücken, die tiefer liegen, als der durch Zentrifugalkraft an den Membranoberflächen erzeugte Austrittdruck der dispersen Phase, in den Behälter 145 geführt. Die Membranscheiben 146 sind mit O-Ringen 129 gegenüber dem Membranstützelement abgedichtet.

Im Folgenden werden bevorzugte Ausführungsbeispiele der Erfindung erläutert:
Beispiel 1: Filtration von Magermilch: Ein Mikrosieb (Filtermedium) mit einer Porengröße von 0,9 Mikron und einer Membranstärke von ca. 1 Mikron und einer offenen Fläche von >20 % ist in einer drehbaren Scheibe, dem Filterträger, in einem Abstand von circa 5 cm von der Rotationsachse angebracht. Der Filterbehälter wurde mit Magermilch bei 18-23 °C gefüllt und ein konstanter TMD von 0,1 bar eingestellt, während die Scheibe mit dem Filtermedium bei einer konstanten Geschwindigkeit von 20 Zyklen pro Sekunde rotiert wird. Die anfängliche Filtrationsleistung oder Filtrationsfluss (Flux) lag bei ungefähr 8.000 l/m²/h, aber sank innerhalb von wenigen Sekunden auf weniger als 500 l/m²/h. Eine solche Verringerung der Filtrationsleistung ist typisch für den Stand der Technik bei einem Filtrationsapparat, in dem diese Art von Filtermedium Verwendung findet. Wenn die erfindungsgemäße Saugleiste oder Düsenplatte so eingesetzt wurde, dass das Filtermedium periodisch lokal gereinigt wurde, konnte der Flux auf über 5.000 l/m²/h wiederhergestellt werden.

Wird die erfindungsgemäße Hochfrequente Strömungsumkehr mit Saugleiste bzw. Düsenplatte allerdings von Anfang an eingesetzt, konnten über 4 - 6 Stunden stabil Permeatmengen von 18 - 30 m³/m²/h bei Drücken bis max. 0,15 bar und Rotationsgeschwindigkeiten von 10 - 20 Zyklen pro Sekunde erzeugt werden. Mit diesem Verfahren kann die Bakterienbelastung in der Magermilch, gemessen in KBE (kolonienbildende Einheiten), um 4- 6 log-Stufen reduziert werden. Der Schlitz hat hier eine Breite von 0,5 mm und einen Abstand von etwa 500 µm gegenüber dem Filtermedium. Die Umfanggeschwindigkeit liegt bei 2πx5 cm und die effektive Filtrationszeit beträgt etwa 99,7 %.

Beispiel 2: Vollmilch: Mit der oben beschriebenen erfindungsgemäßen Vorrichtung und einem Mikrosieb als Filtermittel mit einem Porendurchmesser von 0,9 Mikron wurde Vollmilch mit 3,6 % Milchfett bei 50 °C filtriert. Bei Rotationsgeschwindigkeiten von 20 - 30 Zyklen pro Sekunde und ebenso vielen Rückpulsintervallen konnten 9 - 12 m³/m²/h bei Drücken um 0,2 bar während über 4 Stunden stabil filtriert werden.

Beispiel 3, Filtration von Bier: Hier ist ein Mikrosieb (Filtermedium) mit einer Porengröße von 0,6 Mikron in einer drehbaren Scheibe circa 5 cm von der Rotationsachse entfernt angebracht. Der Filterbehälter wurde mit ungefilterten Bier bei 5 °C gefüllt und ein konstanter TMD von 0,1 bar eingestellt. Die Rotation der Scheibe mit dem Filtermedium wurde auf eine konstante Geschwindigkeit von 10 Zyklen pro Sekunde eingestellt. Die anfängliche Filtrationsleistung (Flux) liegt bei ungefähr 12.000 l/m²/h, sinkt aber innerhalb von zehn Sekunden auf weniger als 1.000 l/m²/h. Wurde die Absaugung durch Saugleiste oder Düsenplatte zugeschaltet, so dass das Filtermedium periodisch lokal gesäubert wurde, konnte der durchschnittliche Flux auf einen Wert von 8.000 l/m²/h wiederhergestellt werden. Der Schlitz hat hier eine Breite von 0,8 mm und einen Abstand von etwa 500 µm gegenüber dem Filtermedium. Die Umfangsgeschwindigkeit liegt bei 2πx5 cm und die effektive Filtrationszeit beträgt etwa 99,5 %.

Beispiel 4: Emulgierung: Es ist bekannt, dass keramische Membranen ausgiebig für Emulgierungsanwendungen mit einer nicht-rotierenden Membranvorrichtung untersucht worden sind. Typische Dispersionsphasenströme eines Öls bei der Erstellung einer Öl-in-Wasser-Emulsion unter Verwendung einer keramischen Membran mit einer mittleren Porengröße von 0,8 Mikrometer sind 30-100 l/m²/h bei einem Betriebsdruck von 3-10 bar. Die mittlere Emulsionströpfchengröße ist dann typischerweise wenige Mikrometer mit einer weiten Tropfengrößenverteilung.

Mit einer erfindungsgemäßen Vorrichtung, in der rotierende Mikrosiebmembranen mit schlitzförmigen Poren mit einer Porengröße von 0,8 Mikron verwendet wurden, war es möglich in der kohärenten, wässrigen Phase Flüsse eines Sonnenblumenöls zur Erstellung einer Öl-in-Wasser Emulsion von 3,000-5,000 l/m²/h bei einem Betriebsdruck von nur 0,3 bar bei 40 Umdrehungen pro Sekunde zu erzeugen. Überraschenderweise wurden Emulsionströpfchen von einer mittleren Größe um 1,6 Mikrometer gefunden, mit einer Standardabweichung der Größenverteilung von 0,2 Mikrometer.

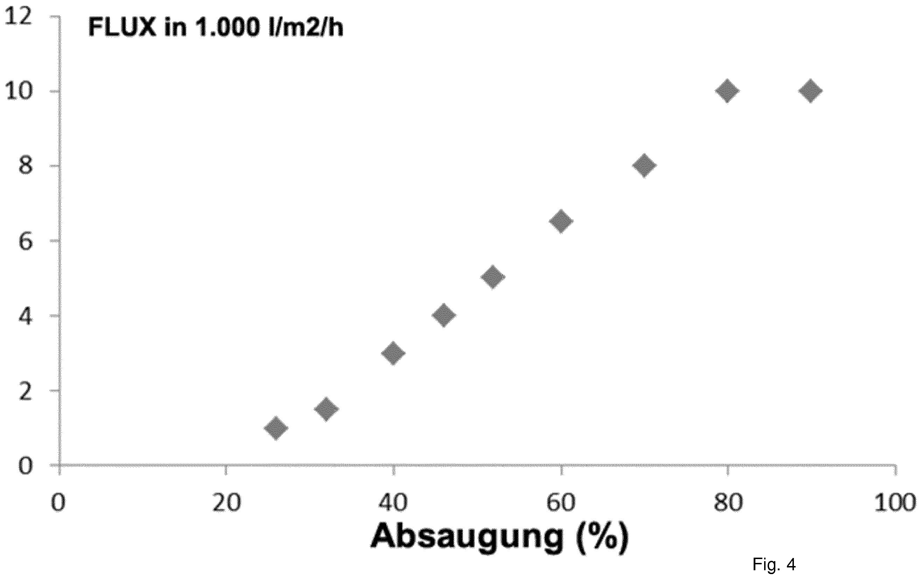

Figur 4 zeigt den Flux, wenn Düse oder Saugleiste betrieben wird und lokal ein umgekehrter Durchfluss, gemäß Erfindung, als Funktion des Ansaugdrucks (oder Energie), der über der Mikrosieboberfläche erzeugt wird, um Partikel und Beläge zu entfernen. Auf diese Weise konnte eine durchschnittliche Bierfiltrationsleistung von etwa 6.000 l/m²/h gemessen (bei TMD von 0,1 bar und 5 °C), die über mehr als 16 Stunden gehalten wurde, erzielt werden.

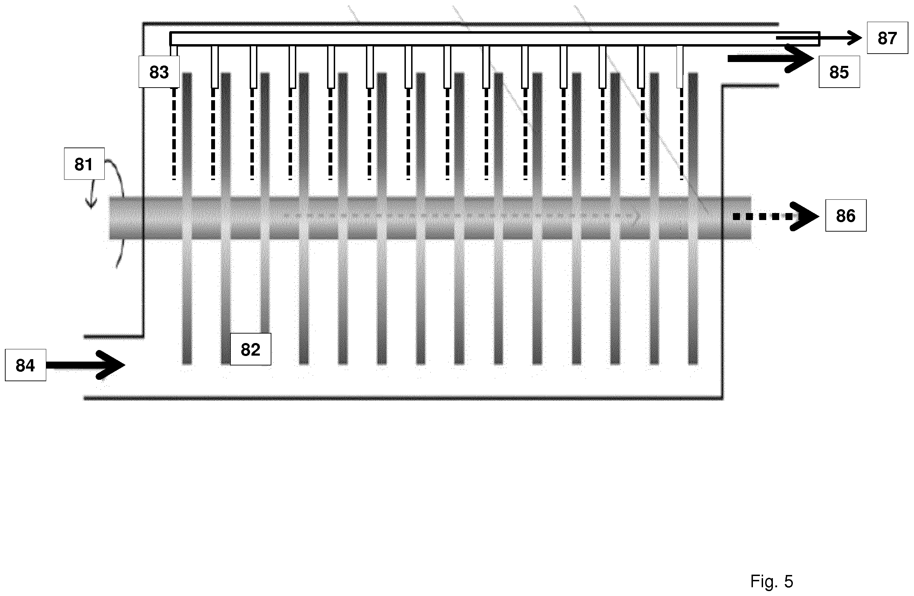

Figur 5 zeigt eine rotierende Filtrationsvorrichtung 81, in der mehrere parallel aufgereihte Mikrosiebe 82 rotieren, ausgestattet mit integrierter Düse oder Saugleiste 83, mit Zulauf, Überlauf und Filtratablauf 84, 85, um den Filtratstrom zu sammeln 86. Es ist ersichtlich, dass die Saugvorrichtung diverse Saugfortsätze aufweist, welche sich zwischen die Mikrosiebe erstrecken. Es wird periodisch, bei jeder Umdrehung die deckschichtreiche Konzentratflüssigkeit direkt von den Mikrosieben entfernt 87.

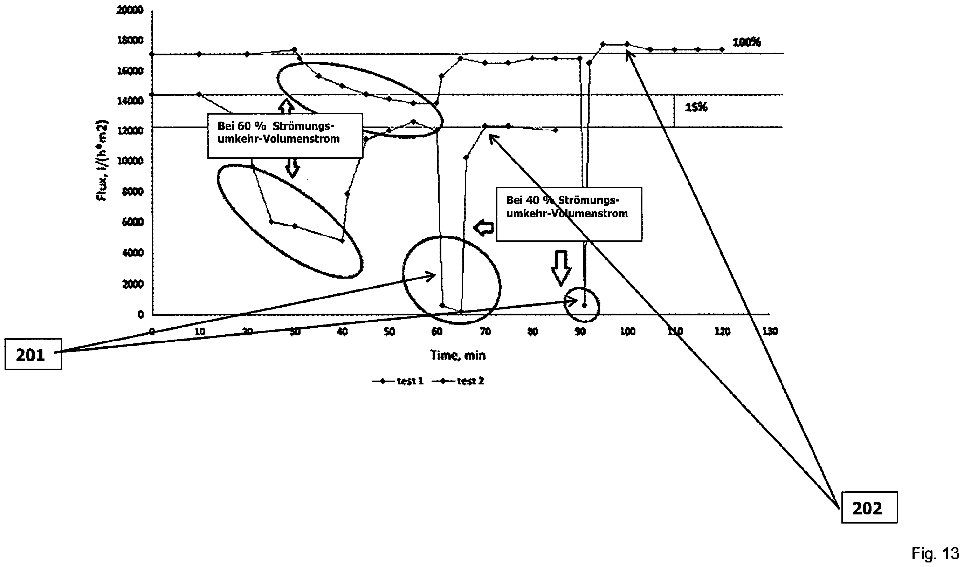

Die rasche und hohe Wirksamkeit der hochfrequenten Strömungsumkehr wird nachfolgend anhand Figur 13 gezeigt, wo die Einstellung des Soges in Abhängigkeit der Pumpenleistung bei zwei verschiedenen Testflüssigkeiten (Magermilch mit unterschiedlichen Fettanteilen, genannt "test 1" und "test 2") zunächst um 40 %, dann um 60 % reduziert und anschließend wieder auf 100 % angehoben wurde. Es ist deutlich zu sehen, wie schnell und stark - weit über 90 % - der Flux besonders bei Reduktion der Pumpenleistung auf 40 % absinkt (siehe Bezugszeichen 201) und sich bei Wiedereinstellung der ursprünglichen Pumpenleistung (100 %) und damit des an der Membranoberfläche wirkenden Soges wieder erholt (vgl. Bezugszeichen 202), wenn die Deckschichten wieder wirksam entfernt werden. Die Graphik zeigt, wie schnell die Filtrationsleistung zusammenbricht und wie effizient die Strömungsumkehr funktioniert. Wenn man die Saugleistung um 60% reduziert, fällt der Flux um über 95 %. Sobald man die Saugleistung wieder anhebt, wird die Deckschicht sofort wieder beseitigt; die ursprüngliche Filtrationsleistung (gemessen am Flux) ist wiederhergestellt.

Vorstehend wurde die Erfindung bereits mit Bezug auf die Figuren beschrieben. Es ist zu verstehen, dass die in den Figuren gezeigten Ausführungsbeispiele lediglich der Illustration dienen und keine Beschränkung der beanspruchten Erfindung darstellen. Es zeigen:
Figur 1: Einen Querschnitt in schematischer Darstellung durch ein Mikrosieb während der Filtration. Gezeigt ist eine Standardsituation, wie sie sich bereits nach kurzer Filtrationszeit ergibt. Es hat sich ein Filterkuchen, eine Deckschickt, über dem Filtermedium aufgebaut, der die Poren verblockt.
Figur 2: eine schematische Schnittdarstellung der Erfindung. Es wird deutlich wie im Vergleich zu Fig. 1 die Filtermediumoberfläche abgereinigt wird und die verblockten Poren wieder frei werden;
Figur 3: eine alternative Ausführungsform der Erfindung;
Figur 4: einen Flux in einer erfindungsgemäßen Filtervorrichtung;
Figur 5: ein weiteres Ausführungsbeispiel der Erfindung in Form eines rotierenden, horizontal angeordneten Filtermediumstapels und entsprechend ausgebildeter Saugvorrichtung;
Figur 6: ein Ausführungsbeispiel für die Skalierung der Erfindung aufgebaut aus zwei multiplizierbaren und zusammensteckbaren Grundelementen in perspektivischer Darstellung;
Figur 7: das rotierbare Membranstützelement in Aufsicht (links), im Schnitt (Mitte) und in perspektivischer Darstellung (rechts);
Figur 8: das Membranstützelement mit filigranen Stützwänden angeordnet in Form einer Kreisevolvente
Figur 9: das statische Rückpuls- und Membranschutzelement in Aufsicht (links), Seitenansicht (Mitte) und Unteransicht (rechts, obere Darstellung) sowie in perspektivischer Darstellung (rechts, untere Darstellung);
Figur 10: eine rotierbare Hohlwelle als Filtrat/Permeat-Ableitungskanal
Figur 11: ein Ausführungsbeispiel einer Emulgierungsvorrichtung (Grundmodul) in Draufsicht;
Figur 12: die Emulgierungsvorrichtung der Fig. 11 im Querschnitt; und
Figur 13: ein Diagramm, welches den Filtrationsflux über die Zeit von zwei verschiedenen Testflüssigkeiten und in Abhängigkeit von der Pumpleistung darstellt.

## Patentansprüche

1. Vorrichtung für die Mikro-, Ultra- oder Nanofiltration und/oder die Emulgierung von Flüssigkeiten
mit zumindest einem rotierbaren Membranmedium mit einer Filtrat-/Permeatseite bzw. einer einer dispersen Phase zugewandten Seite und einer Konzentrat-/Retentatseite bzw. einer einer kohärenten Phase zugewandten Seite,
und mit einem Behälter, in dem das Membranmedium rotierbar ist und der mindestens einen Zulauf für ein Unfiltrat oder die kohärente Phase, mindestens einen Überlauf für ein Unfiltrat oder eine Emulsion und mindestens einen rotierbaren Kanal für Filtrat-/Permeatablauf bzw. Zulauf der dispersen Phase und eine Saugvorrichtung aufweist,
um auf Teilbereichen des zumindest einen rotierbaren Membranmediums im Behälter in kleinen Zeitabschnitten, bevorzugt intervallmäßig, mit einer Frequenz von 1-100 Hz, auf einer Unfiltratseite bzw. der kohärenten Phase zugewandten Seite einen Unterdruck zu erzeugen, wobei die Saugvorrichtung zumindest eine parallel zum rotierbaren Membranmedium angeordnete Saugleiste oder Düsenplatte aufweist oder eine solche ist, die in einem Abstand von 0,05 mm - 0,5 mm von dem Membranmedium angebracht ist,
und damit eine Oberfläche des Membranmediums von auf der Unfiltratseite während eines Filtrationsvorganges angesammelten nicht permeierenden Stoffen reinigt, bzw. auf der der kohärenten Phase zugewandten Seite während eines Emulgierungsvorgangs eine Tropfenbildung der aus einer Membranoberfläche austretenden dispersen Phase fördert, wobei die Saugleiste oder Düsenplatte zumindest eine Düse bzw. einen Saugschlitz aufweist, die bzw. der eine Breite zwischen 50 µm und 10 mm, bevorzugt zwischen 200 µm und 1 mm hat.

2. Vorrichtung nach Anspruch 1, wobei die Saugvorrichtung eine Gesamtbreite hat, die einem Mehrfachen des Abstands der Saugvorrichtung zu dem zumindest einen Membranmedium und parallel zu dem zumindest einen Membranmedium entspricht, insbesondere, dass die Gesamtbreite mindestens fünfmal breiter ist als der Abstand der Saugvorrichtung zu dem zumindest einen Membranmedium.

3. Vorrichtung nach Anspruch 1 oder 2, wobei der Abstand der Saugvorrichtung zu dem Membranmedium zwischen 0,05 mm und 0,25 mm beträgt.

4. Vorrichtung nach einem der vorstehenden Ansprüche, wobei mehrere Saugvorrichtungen parallel über der Membranoberfläche radial über einen gesamten Radius angeordnet sind.

5. Vorrichtung nach einem der vorstehenden Ansprüche, wobei das Membranmedium ein Mikrosieb ist.

6. Vorrichtung nach einem der vorstehenden Ansprüche, wobei das Membranmedium versenkt ist in einen Träger mit einem Abstand zwischen 10 und 500 µm, bevorzugt zwischen 50 und 200 µm.

7. Vorrichtung nach einem der vorstehenden Ansprüche, wobei die Schlitze oder die Düsen mehrseitig auf der Saugvorrichtung angebracht sind, bevorzugt in einem Winkel von 180° auf der gegenüberliegenden Seite.

8. Vorrichtung nach einer der vorstehenden Ansprüche, **dadurch gekennzeichnet, dass** das Membranmedium scheibenförmig ist, insbesondere dass es zumindest ein Mikrosieb ist, und dass das Membranmedium mittels anodischem Bonden fest mit einem Glasstützkörper verbunden und abgedichtet worden ist.

9. Vorrichtung nach einem der vorstehenden Ansprüche, **dadurch gekennzeichnet, dass** sie mit einer Mehrzahl von zwei unterschiedlich aufgebauten, zusammensteckbaren Grundelementen, nämlich einem Membranstützelement, auf welchem das Membranmedium abgestützt ist, und einer als Impulssogelement ausgestalteten Saugvorrichtung, auf beliebige Baugrößen skalierbar ist, wobei insbesondere mehrere Membranstützelemente und mehrere Impulssogelemente abwechselnd über einer Hohlwelle übereinander stapelbar sind, wodurch die Vorrichtung aufbaubar ist.

10. Vorrichtung nach Anspruch 9, **dadurch gekennzeichnet, dass** die Hohlwelle rotierbar ist und Mitnehmer aufweist, wobei zumindest je ein Mitnehmer mit je einem Membranstützelement in Eingriff tritt, so dass eine Rotation der Hohlwelle auf die Membranstützelemente übertragbar ist.

11. Verwendung einer Vorrichtung nach einem der vorstehenden Ansprüche für die Filtration, insbesondere für das Filtrieren von Fruchtsäften, Algen, Ölen, Proteinen, Enzymen, Extrakten, Mikroorganismen, Bier oder Milch.

12. Verwendung einer Vorrichtung nach einem der Ansprüche 1-10 zum Diafiltrieren von Phagen, Proteinen und Enzymen aus Nährlösungen.

13. Verwendung einer Vorrichtung nach einem der Ansprüche 1-10 zur Emulgierung von Flüssigkeiten.

## Claims

1. Device for the microfiltration, ultrafiltration or nanofiltration and/or emulsification of liquids,
comprising at least one rotatable membrane medium having a filtrate/permeate side or a side facing towards a dispersed phase and a concentrate/retentate side or a side facing towards a coherent phase,
and comprising a container in which the membrane medium can be rotated and which has at least one inlet for an unfiltrate or the coherent phase, at least one overflow for an unfiltrate or an emulsion, and at least one rotatable channel for discharging the filtrate/permeate and/or for feeding in the dispersed phase, and a suction device
for generating a negative pressure on sub-regions of the at least one rotatable membrane medium in the container in short time periods, preferably at intervals, with a frequency of 1-100 Hz, on an unfiltrate side or the side facing towards the coherent phase,
wherein the suction device has or is at least one suction strip or nozzle plate, which is arranged parallel to the rotatable membrane medium and is mounted at a distance of 0.05 mm - 0.5 mm from the membrane medium,
and thus cleans a surface of the membrane medium of non-permeating substances that have accumulated on the unfiltrate side during a filtration process, and/or promotes the formation of droplets of the dispersed phase emerging from a membrane surface on the side facing towards the coherent phase during an emulsification process,
wherein the suction strip or nozzle plate has at least one nozzle or one suction slot, which has a width between 50 µm and 10 mm, preferably between 200 µm and 1 mm.

2. Device according to claim 1, wherein the suction device has a total width that is a multiple of the distance of the suction device from the at least one membrane medium and parallel to the at least one membrane medium, in particular in that the total width is at least five times wider than the distance of the suction device from the at least one membrane medium.

3. Device according to claim 1 or 2, wherein the distance of the suction device from the membrane medium is between 0.05 mm and 0.25 mm.

4. Device according to any one of the preceding claims, wherein a plurality of suction devices are arranged in parallel across the membrane surface, radially over an entire radius.

5. Device according to any one of the preceding claims, wherein the membrane medium is a microsieve.

6. Device according to any one of the preceding claims, wherein the membrane medium is sunk into a carrier at a distance of between 10 and 500 µm, preferably between 50 and 200 µm.

7. Device according to any one of the preceding claims, wherein the slots or the nozzles are mounted on the suction device on multiple sides, preferably at an angle of 180° on the opposite side.

8. Device according to any one of the preceding claims, **characterized in that** the membrane medium is disc-shaped, in particular **in that** it is at least one microsieve, and **in that** the membrane medium has been fixedly connected and sealed to a glass support body by anodic bonding.

9. Device according to any one of the preceding claims, **characterized in that** it can be scaled to any size by using a multitude of two differently constructed basic elements that can be plugged together, namely a membrane support element, on which the membrane medium is supported, and a suction device designed as a pulse suction element, wherein in particular a plurality of membrane support elements and a plurality of pulse suction elements can be stacked in an alternating manner one above the other over a hollow shaft, as a result of which the device can be built up.

10. Device according to claim 9, **characterized in that** the hollow shaft is rotatable and has tappets, wherein at least one tappet engages with each membrane support element so that a rotation of the hollow shaft can be transferred to the membrane support elements.

11. Use of a device according to any one of the preceding claims for filtration, in particular for the filtration of fruit juices, algae, oils, proteins, enzymes, extracts, microorganisms, beer or milk.

12. Use of a device according to any one of claims 1-10 for the diafiltration of phages, proteins and enzymes from nutrient solutions.

13. Use of a device according to any one of claims 1-10 for the emulsification of liquids.

## Revendications

1. Dispositif de micro-, ultra- ou nanofiltration et/ou d'émulsification de liquides pourvu d'au moins un moyen formant membrane rotatif qui comprend un côté filtrat/perméat ou un côté tourné vers une phase dispersée et un côté concentrat/rétentat ou un côté tourné vers une phase cohérente,
et pourvu d'un récipient dans lequel le moyen formant membrane est rotatif et qui présente au moins une arrivée pour un liquide non filtré ou pour la phase cohérente, au moins un trop-plein pour un liquide non filtré ou une émulsion et au moins un conduit rotatif pour l'évacuation du filtrat/perméat ou l'arrivée de la phase dispersée et un dispositif d'aspiration, pour générer un vide dans des zones partielles du au moins un moyen formant membrane rotatif dans le récipient à de petits intervalles de temps, de préférence à intervalles réguliers, avec une fréquence de 1 à 100 Hz, sur un côté tourné vers le côté liquide non filtré ou la phase cohérente,
le dispositif d'aspiration comportant ou étant au moins une rampe d'aspiration ou une plaque à buses disposée parallèlement au moyen formant membrane rotatif et placé à une distance de 0,05 mm à 0,5 mm du moyen formant membrane,
et nettoyant ainsi une surface du moyen formant membrane des substances non perméantes accumulées sur le côté liquide non filtré pendant une opération de filtration, ou favorisant une formation de gouttes de la phase dispersée sortant d'une surface de la membrane sur le côté tourné vers la phase cohérente pendant une opération d'émulsification,
la rampe d'aspiration ou la plaque à buses présentant au moins une buse et/ou une fente d'aspiration, qui a une largeur comprise entre 50 µm et 10 mm, de préférence entre 200 µm et 1 mm.

2. Dispositif selon la revendication 1, dans lequel le dispositif d'aspiration a une largeur totale qui correspond à un multiple de la distance du dispositif d'aspiration par rapport au au moins un moyen formant membrane et parallèle au au moins un moyen formant membrane, en particulier la largeur totale étant au moins cinq fois plus large que la distance du dispositif d'aspiration par rapport au au moins un moyen formant membrane.

3. Dispositif selon la revendication 1 ou 2, dans lequel la distance du dispositif d'aspiration par rapport au au moins un moyen formant membrane est comprise entre 0,05 mm et 0,25 mm.

4. Dispositif selon l'une des revendications précédentes, dans lequel plusieurs dispositifs d'aspiration sont disposés parallèlement au-dessus de la surface de la membrane radialement sur un rayon total.

5. Dispositif selon l'une des revendications précédentes, dans lequel le moyen formant membrane est un microtamis.

6. Dispositif selon l'une des revendications précédentes, dans lequel le moyen formant membrane est encastré dans un support avec une distance comprise entre 10 et 500 µm, de préférence entre 50 et 200 µm.

7. Dispositif selon l'une des revendications précédentes, dans lequel les fentes ou les buses sont disposées multilatéralement sur le dispositif d'aspiration, de préférence à un angle de 180° du côté opposé.

8. Dispositif selon l'une des revendications précédentes, **caractérisé en ce que** le moyen formant membrane est en forme de disque, en particulier **en ce qu'**il est au moins un microtamis, et **en ce que** le moyen formant membrane a été solidement relié à un corps de support en verre grâce à une liaison anodique et étanchéisé.

9. Dispositif selon l'une des revendications précédentes, **caractérisé en ce qu'**il est modulable à la taille de construction souhaitée grâce à une pluralité de deux éléments de base emboîtables de structure différente, à savoir un élément de support de membrane sur lequel le moyen formant membrane est supporté, et un dispositif d'aspiration conçu sous forme d'élément d'aspiration - impulsion, en particulier plusieurs éléments de support de membrane et plusieurs éléments d'aspiration - impulsion, sont empilables les uns sur les autres alternativement au-dessus d'un arbre creux, ce qui permet de construire le dispositif.

10. Dispositif selon la revendication 9, **caractérisé en ce que** l'arbre creux est rotatif et présente des poussoirs, au moins un poussoir rentrant en prise avec un élément de support de membrane respectif, de sorte qu'une rotation de l'arbre creux est transférable aux éléments de support de membrane.

11. Utilisation d'un dispositif selon l'une des revendications précédentes pour la filtration, en particulier pour la filtration de jus de fruits, d'algues, d'huiles, de protéines, d'enzymes, d'extraits, de micro-organismes, de bière ou de lait.

12. Utilisation d'un dispositif selon l'une des revendications 1 à 10 pour la diafiltration de phages, de protéines et d'enzymes à partir de solutions nutritives.

13. Utilisation d'un dispositif selon l'une des revendications 1 à 10 pour l'émulsification des liquides.
